Europäisches Patentamt

European Patent Office

Office européen des brevets

(11) Numéro de publication: **0 502 770 B1**

# FASCICULE DE BREVET EUROPEEN

(45) Date de publication du fascicule du brevet: **13.12.95**   (51) Int. Cl.⁶: **G01C 25/00**, F41G 5/20

(21) Numéro de dépôt: **92400528.3**

(22) Date de dépôt: **28.02.92**

(54) **Procédé et système d'harmonisation autonome d'équipements à bord d'un véhicule, utilisant des moyens de mesure du champ de gravité terrestre**

(30) Priorité: **07.03.91 FR 9102721**

(43) Date de publication de la demande:
**09.09.92 Bulletin 92/37**

(45) Mention de la délivrance du brevet:
**13.12.95 Bulletin 95/50**

(84) Etats contractants désignés:
**DE GB IT**

(56) Documents cités:
**EP-A- 0 278 825      EP-A- 0 383 043**
**DE-B- 1 236 806      GB-A- 1 128 516**
**US-A- 3 803 387      US-A- 4 134 681**

(73) Titulaire: **EUROCOPTER FRANCE**
**Aéroport International Marseille-Provence**
**F-13725 Marignane Cédex (FR)**

(72) Inventeur: **Germanetti, Serge Alexandre**
**26, rue Roger Brun**
**F-13006 Marseille (FR)**

(74) Mandataire: **Bonnetat, Christian et al**
**CABINET BONNETAT**
**23, Rue de St.Pétersbourg**
**F-75008 Paris (FR)**

## Description

La présente invention concerne un procédé, et un système en faisant application, permettant d'harmoniser de façon autonome un ou des équipements implantés à bord d'un véhicule. En particulier, et de façon non limitative, l'invention s'applique aux aéronefs.

On sait que certains équipements embarqués à bord d'un véhicule doivent avoir une orientation fixe par rapport à celui-ci; c'est en particulier le cas d'appareils de navigation par inertie, d'appareils de détection et de systèmes d'armes. L'ensemble de ces équipements doit fonctionner en utilisant des axes de référence communs, ce qui nécessite un calage initial de chacun de leurs axes de référence. Pour ce faire, il est défini un trièdre de référence du véhicule, qui sert de base de référence pour l'orientation de trièdres de référence relatifs aux divers équipements. Une telle opération de calage est appelée harmonisation ou alignement.

Diverses méthodes sont connues pour réaliser cette opération.

Une méthode sophistiquée, suivant le brevet français 2 610 101, consiste à monter l'équipement à harmoniser sur un rack comportant une partie fixe, solidaire du véhicule, et une partie réglable solidaire de l'équipement, la position de cet équipement étant repérée par visée optique et modifiée par référence à une autre mesure optique portant sur un système de référence déjà harmonisé. Cette méthode sert usuellement pour l'harmonisation des centrales inertielles montées à bord d'aéronefs.

Une telle méthode est assez délicate à mettre en oeuvre car elle nécessite des moyens de visée externes au véhicule, et, par ailleurs, elle impose de pouvoir accéder optiquement aux équipements à harmoniser, ce qui est une contrainte importante pour le choix de leur emplacement.

Cette méthode détermine les angles d'erreur d'harmonisation de chaque équipement et nécessite ensuite de les corriger par une rotation mécanique. De ce fait, elle est longue et délicate à mettre en oeuvre.

Une autre méthode consiste à utiliser des plans de pose réalisés avec la précision voulue et harmonisés. Cela nécessite de positionner précisaient un outillage par rapport au véhicule et ensuite de lui faire exécuter un usinage précis du plan de pose, qui est ainsi harmonisé. Ce plan de pose reçoit ensuite deux pions de centrage usinés avec précision, et sur lesquels l'équipement sera monté.

Cette méthode, qui utilise des transferts successifs de précision de positionnement mécanique, est lourde à mettre en oeuvre. En particulier, elle nécessite autant de plans de pose qu'il y a d'équipements à installer, et ceux-ci doivent aussi disposer de moyens de fixation usinés avec précision, ce qui en accroît le prix.

Une autre méthode consiste à disposer l'équipement dans un rack fixe et à effectuer la détermination de l'erreur d'harmonisation par comparaison entre un outillage, servant de référence pour définir les axes du véhicule, et un autre outillage provisoirement substitué à l'équipement à harmoniser. L'erreur d'harmonisation, qui est mémorisée dans la mémoire d'un calculateur du véhicule, sert par la suite à ce dernier pour corriger, par le calcul, les valeurs issues de l'équipement. Ce dernier doit évidemment avoir un dispositif de fixation précis et qui soit la recopie de celui de l'outillage qui a été substitué.

Cette méthode évite ainsi des réglages mécaniques, mais nécessite cependant une reproductibilité des moyens de fixation, ainsi que des mesures par visée optique.

Le brevet US-A-4 134 681 décrit, de son côté, une méthode d'harmonisation utilisant deux rayons laser dont l'orientation de chacun est détectée par deux équipements, qui définissent les composantes de ces rayons sur leur trièdre propre. Un calculateur reçoit ces données et dispose de suffisamment d'équations pour déterminer les trois angles d'erreur entre ces deux équipements. L'un de ces équipements étant déjà harmonisé, l'erreur d'angle calculée est ainsi l'erreur d'harmonisation de l'autre équipement.

Une telle méthode évite ainsi un réglage mécanique, puisque le calculateur sera capable de corriger, par le calcul, les données fournies par l'équipement non harmonisé mécaniquement. Cependant, elle nécessite des mesures optiques, et impose donc des contraintes quant au positionnement des équipements.

Le brevet GB-A-1 128 516 décrit un procédé d'harmonisation, en corrigeant les erreurs angulaires d'harmonisation entre divers systèmes de référence dans deux positions fixes, à partir des mesures des composantes du vecteur gravité représentant le champ de gravité terrestre.

La présente invention a pour objet de remédier à ces divers inconvénients et de permettre l'harmonisation d'équipements à bord d'un véhicule pourvu d'un calculateur recevant les données issues des divers équipements devant être harmonisés, en particulier un aéronef.

A cette fin, il est proposé le procédé selon la revendication 1.

Ainsi, au moyen de des jeux de mesures effectuées par deux appareils semblables, on peut déterminer l'erreur d'harmonisation de l'un d'eux, sans qu'il y ait besoin de visée optique.

Il est à noter que, dans ce procédé, lesdites mesures des vecteurs $\vec{g}1j$, d'une part, et lesdites mesures des vecteurs $\vec{g}2j$, d'autre part, peuvent être, de façon avantageuse, respectivement représentatives des angles $\Phi 1$, $\theta 1$ et $\Omega 1$, représentant l'angle de roulis, l'angle d'assiette longitudinale et l'angle de cap dudit véhicule, d'une part, et des angles $\Phi 2$, $\theta 2$ et $\Omega 2$, représentant l'angle de roulis, l'angle d'assiette longitudinale et l'angle de cap dudit équipement.

De cette façon, la valeur de ces angles est directement accessible pour les calculs de correction d'harmonisation, ce qui permet de les effectuer plus rapidement.

De plus, le procédé selon l'invention peut être appliqué à une pluralité de M (M: entier positif) équipements à harmoniser par rapport audit véhicule, chacun de ces équipements ayant des premiers opérateurs de rotation $R2(\alpha i,\beta i,\Gamma i)$ propres (avec $i = 1$ à M), ce qui présente l'avantage de déterminer simultanément la pluralité des opérateurs de rotation $R2(\alpha i,\beta i,\Gamma i)$, à partir des mesures effectuées par les divers équipements et par un outillage.

Le temps nécessaire à l'harmonisation de cette pluralité d'équipements est ainsi indépendant du nombre desdits équipements, ce qui présente une amélioration certaine par rapport aux méthodes précédemment mentionnées.

Par ailleurs, certains équipements peuvent comporter des interfaces de dialogue, ce qui offre une plus grande souplesse pour l'harmonisation.

De plus, ledit procédé, appliqué à ladite pluralité d'équipements à harmoniser, permet d'utiliser une mémoire unique.

De ce fait, il n'y a pas à ajouter de mémoire supplémentaire lorsqu'un équipement supplémentaire doit être harmonisé.

De même, ledit procédé, appliqué à ladite pluralité d'équipements à harmoniser, permet d'utiliser un calculateur unique.

Ce calculateur unique peut ainsi traiter toutes les données des appareils installés, sans qu'il y ait besoin d'adjoindre d'autres calculateurs. Il dispose aussi de tous les résultats de mesure, ce qui évite des échanges de données, qui ralentiraient le système.

Ledit procédé selon l'invention présente aussi l'avantage de pouvoir être complété par des mesures supplémentaires qui en augmentent la précision de la correction de l'erreur d'harmonisation.

Les corrections initiales sont ainsi améliorées d'une façon continue, de par l'effet d'intégration d'un grand nombre de mesures, ce qui permet d'avoir une résolution supérieure à celle d'un appareil de mesure.

De plus, le procédé selon l'invention permet de choisir, comme outillage, le plus performant parmi les appareils du type de l'équipement à harmoniser.

On dispose ainsi d'une référence de la meilleure précision disponible.

Ce procédé permet aussi qu'au moins l'outillage ou au moins un équipement fournisse, de plus, des données relatives à la vitesse et / ou à l'accélération dudit véhicule.

On dispose ainsi d'informations supplémentaires permettant d'améliorer encore la précision des mesures.

Par ailleurs, un système selon la revendication 8 fait application dudit procédé pour l'harmonisation d'un équipement par rapport à un véhicule.

Ainsi, ledit système permet, de façon autonome, l'harmonisation d'équipements, sans qu'il y ait besoin de moyens externes de calcul ou de visée optique.

Par ailleurs, ledit système présente l'avantage de permettre à au moins l'outillage ou au moins à un équipement de fournir, de plus, des données relatives à la vitesse et / ou à l'accélération dudit véhicule.

La précision des résultats calculés est ainsi améliorée.

Les figures du dessin annexé feront bien comprendre comment l'invention peut être réalisée. Sur ces figures, des références identiques désignent des éléments identiques ou semblables.

La figure 1 représente schématiquement un véhicule, dans lequel est implanté un équipement à harmoniser.

La figure 2 représente des systèmes de référence d'orientation, permettant de repérer les divers appareils.

La figure 3 illustre la généralisation de ce procédé d'harmonisation au cas d'une pluralité de M (M: entier positif) équipements à harmoniser.

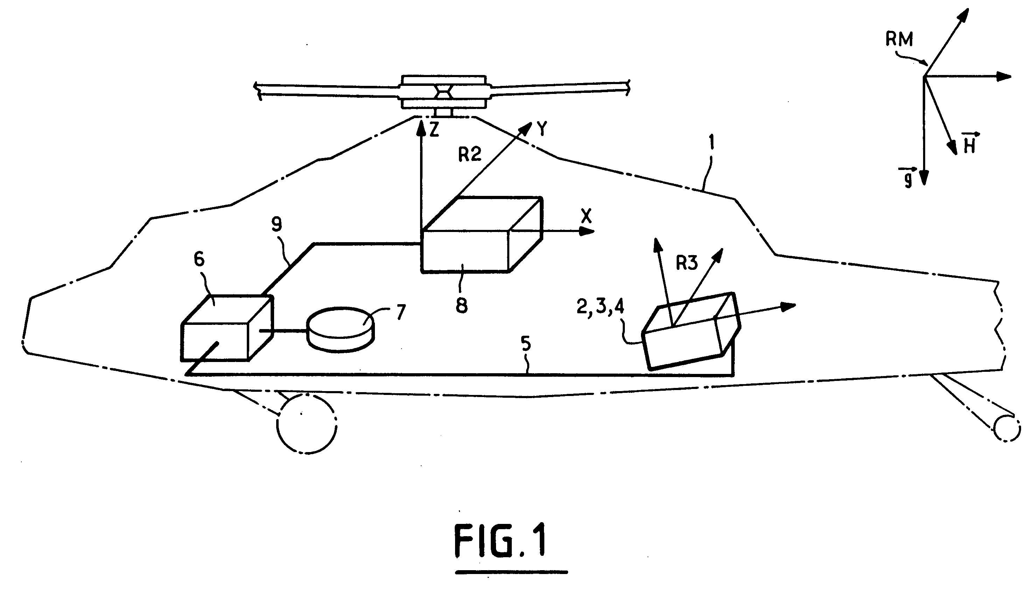

Un véhicule 1 est représenté schématiquement à la figure 1, sous la forme d'un hélicoptère, dans lequel est implanté un équipement 2 devant être harmonisé vis-à-vis de cet hélicoptère. Cet équipement 2 comporte un dispositif de mesure des composantes du gradient de champ de gravité, qui définit la verticale, sous forme d'un bloc accélérométrique 3 ou d'un bloc gyrométrique 4, ou des deux. Une première liaison 5 relie l'équipement 2 à un calculateur 6 et à une mémoire 7 associée. Par ailleurs, un outillage 8 déjà harmonisé, comprenant un équipement comparable à l'équipement 2, est aussi implanté dans le véhicule 1. Une seconde liaison 9 permet de relier l'outillage 8 à la mémoire 7 à travers le calculateur 6.

L'équipement 2 et l'outillage 8 peuvent mesurer, dans un système de référence d'orientation qui est propre à chacun et lui est lié de façon fixe, les composantes d'une grandeur physique orientée et d'amplitude constante localement, représentée par un vecteur, tel le vecteur $\vec{g}$ orienté selon le gradient du champ de gravité terrestre, et qui définit la verticale.

L'orientation des systèmes de référence est définie de la façon suivante. Il est défini un premier système de référence RM absolu, servant de référence d'orientation absolue pour d'autres systèmes de référence. Un deuxième système de référence R2 est lié de façon fixe au véhicule 1 et définit l'orientation de ce dernier par rapport au premier système de référence RM absolu. Un troisième système de référence R3 est lié de façon fixe à l'équipement 2 et définit l'orientation de ce dernier par rapport au premier système de référence RM absolu. De façon préférée, ces systèmes de référence sont constitués de trièdres tri-rectangles.

Les deux systèmes de référence R2 et R3 présentent une erreur d'harmonisation qui peut être représentée par un opérateur de rotation $R(\alpha,\beta,\Gamma)$ défini à partir des angles d'Euler permettant de passer d'un système de référence à l'autre, comme cela est expliqué ci-dessous. Cet opérateur de rotation $R(\alpha,\beta,\Gamma)$ constitue un opérateur représentant l'erreur d'harmonisation de l'équipement 2, et qui permet, en l'appliquant aux composantes du vecteur mesurées par cet équipement 2, de calculer des valeurs correspondantes de composantes de ce vecteur non entachées de l'erreur d'harmonisation.

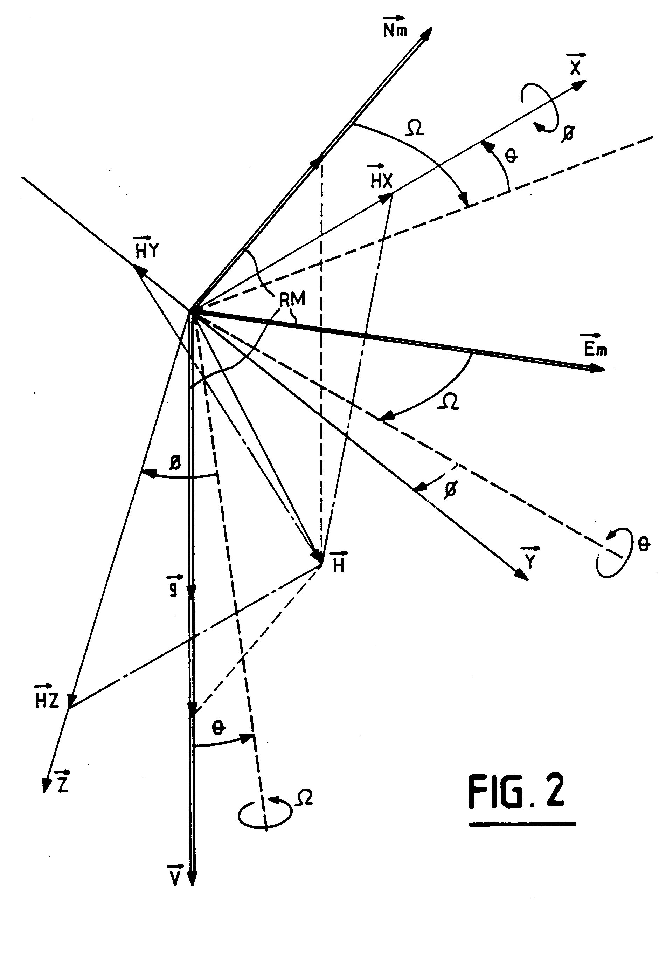

Comme le montre la figure 2, en utilisant la direction du champ magnétique local $\vec{H}$ et du gradient de la gravité terrestre $\vec{g}$, on peut définir le système de référence RM absolu, constitué, par exemple, d' axes définissant un trièdre tri-rectangle local, formé par un axe $\vec{V}$ parallèle au gradient du champ de gravité terrestre, orienté vers le centre de la Terre, et donnant la verticale locale, par un axe horizontal $\vec{N}m$, donnant le nord magnétique, et par un troisième axe $\vec{E}m$ donnant l'Est magnétique. Le gradient du champ de gravité, représenté par le vecteur $\vec{g}$, est colinéaire avec $\vec{V}$, tandis que le champ magnétique local, représenté par un vecteur $\vec{H}$, est contenu dans le plan défini par les axes $\vec{V}$ et $\vec{N}m$, et a donc respectivement une composante selon ces deux axes $\vec{V}$ et $\vec{N}m$.

Si l'on définit un deuxième trièdre d'axes $\vec{X}$ $\vec{Y}$ $\vec{Z}$, représentant le deuxième système de référence du véhicule 1, dans lequel s'effectuent les mesures des trois composantes $\vec{H}X$, $\vec{H}Y$, $\vec{H}Z$ de ce même vecteur $\vec{H}$, le passage de l'un à l'autre de ces trièdres de référence RM et XYZ nécessite trois rotations successives définies par des angles d'Euler définis comme:

$\Omega$:  angle de cap magnétique

$\theta$:  angle d'assiette longitudinale

$\Phi$:  angle de roulis

Ces trois rotations s'écrivent selon la matrice classique des angles d'Euler:

$$R(\Phi,\theta,\Omega) =$$

$$\begin{vmatrix} \cos\Omega \, \cos\theta & \cos\Omega \, \sin\theta \, \sin\Phi - \sin\Omega \, \cos\Phi & \sin\Omega \, \sin\Phi + \cos\Omega \, \sin\theta \, \cos\Phi \\ \sin\Omega \, \cos\theta & \cos\Omega \, \cos\Phi + \sin\Omega \, \sin\theta \, \sin\Phi & \sin\Omega \, \sin\theta \, \cos\Phi - \cos\Omega \, \sin\Phi \\ -\sin\theta & \cos\theta \, \sin\Phi & \cos\theta \, \cos\Phi \end{vmatrix}$$

Le premier système de référence RM absolu peut alors servir de référence locale pour chacun des appareils cités ci-dessus, c'est-à-dire l'équipement 2 et l'outillage 8, qui sont aptes à mesurer les composantes du vecteur gradient du champ de gravité terrestre $\vec{g}$ sur les axes de leur propre système de référence, l'existence d'écarts entre les mesures des trois composantes du même vecteur $\vec{g}$ par deux appareils semblables est révélatrice d'une erreur d'orientation entre leurs systèmes de référence. Ainsi, les composantes mesurées selon les axes du système de référence de l'appareil considéré peuvent être exprimées par des relations trigonométriques simples, à partir de l'amplitude de ce vecteur et de l'angle qu'il fait avec chacun des axes, ce qui permet ainsi de déterminer cet angle. Si les composantes de ce même vecteur, mesurées dans le trièdre de l'autre appareil, ne sont pas identiques, il suffit de faire tourner le trièdre de référence de ce dernier jusqu'à obtenir l'égalité des composantes homologues dans les deux trièdres, ce qui est effectué sous forme d'une correction mathématique simulant l'effet d'une rotation physique des trièdres de référence. Il faut cependant disposer de suffisamment d'équations pour pouvoir déterminer la valeur des angles traduisant l'erreur d'orientation du troisième système de référence R3 de l'équipement 2 à harmoniser par rapport au deuxième système de référence R2 du véhicule 1, ce qui est exposé ci-dessous.

Afin d'établir un dialogue entre l'outillage 8 et l'équipement 2 à harmoniser, ce dernier comporte une entrée lui permettant de recevoir de l'extérieur les références absolues sur lesquelles il doit s'harmoniser.

L'harmonisation s'effectue en position fixe, le véhicule 1 étant posé au sol suivant des angles Φ1, θ1 connus dans le premier système de référence RM absolu, mesurés par l'outillage 8 qui comporte une centrale inertielle au moins aussi précise que celle à harmoniser. Comme indiqué précédemment, l'outillage 8 est préalablement harmonisé au moyen, par exemple, de l'une des méthodes indiquées initialement.

L'opération d'harmonisation s'effectue en réalisant des mesures des composantes du vecteur gradient du champ de gravité terrestre $\vec{g}$ selon deux orientations différentes du véhicule 1. Cela nécessite de mémoriser lesdites mesures pour deux orientations de ce véhicule 1. Ces mesures de composantes du vecteur $\vec{g}$ peuvent être transformées en valeurs d'angles Φ, θ, Ω significatifs de l'orientation du système de référence de l'appareil qui a réalisé ces mesures.

A cet effet, le véhicule 1 va être mis dans une première position, définie par des angles de roulis Φ11 et d'assiette longitudinale θ11, déterminables à partir des mesures effectuées par l'outillage 8 dans le deuxième système de référence R2, tandis que, de son côté, l'équipement 2 permet de définir, par ses mesures, des angles de roulis Φ21 et d'assiette longitudinale θ21 dans son troisième système de référence R3.

Cela amène à effectuer le début d'une première série d'étapes, comme indiqué ci-après:

- on dispose, de façon fixe à bord du véhicule 1, l'outillage 8 harmonisé par rapport à celui-ci, et comparable audit équipement 2;
- on place le véhicule 1 dans ladite première position fixe par rapport au sol, ce qui correspond à un premier positionnement R21 dudit deuxième système de référence R2 par rapport audit premier système de référence RM absolu;
  puis on effectue la suite de ladite première série d'étapes, en réalisant les étapes suivantes:
- on mesure avec l'outillage 8, des premières valeurs, représentatives des composantes d'un vecteur $\vec{g}$11 représentant le champ de gravité terrestre $\vec{g}$ perçu par l'outillage 8 dans le deuxième système de référence R2, et on transforme lesdites premières valeurs en premières données, significatives desdites premières valeurs;
- on transmet à la mémoire 7, par ladite seconde liaison 9 reliant l'outillage 8 à ladite mémoire 7, et l'on y mémorise, lesdites premières données;

Simultanément au déroulement de ladite suite de la première série d'étapes, on va mesurer et mémoriser des données permettant de déterminer les angles Φ2 et θ2 de la centrale 2.

Cela amène à effectuer les étapes suivantes, constituant la fin de ladite première série d'étapes:

- on mesure, avec ledit équipement 2, des deuxièmes valeurs, représentatives des composantes d'un vecteur $\vec{g}$21 représentant le champ de gravité terrestre $\vec{g}$ perçu par l'équipement 2 dans le troisième système de référence R3, et on transforme lesdites deuxièmes valeurs en deuxièmes données, significatives desdites deuxièmes valeurs;
- on transmet à la mémoire 7, par ladite première liaison 5, et l'on y mémorise, lesdites deuxièmes données;

Les deux vecteurs ainsi mesurés sont liés par la relation:

$$\vec{g}11 \quad = \quad R1(\alpha,\beta,\Gamma) \quad x \quad \vec{g}21$$

ou, exprimé par leurs composantes:

$$\begin{vmatrix} -\sin\ \theta11 \\ \sin\ \Phi11\ \cos\ \theta11 \\ \cos\ \Phi11\ \cos\ \theta11 \end{vmatrix} = R1(\alpha,\beta,\Gamma)\ x \begin{vmatrix} -\sin\ \theta21 \\ \sin\ \Phi21\ \cos\ \theta21 \\ \cos\ \Phi21\ \cos\ \theta21 \end{vmatrix}$$

ce qui utilise un premier opérateur de rotation R1($\alpha,\beta,\Gamma$), de valeur voisine de celle de l'opérateur théorique R($\alpha,\beta,\Gamma$), permettant de corriger, au moyen du calculateur 6, les mesures effectuées par l'équipement 2.

Cependant, cette relation équivaut à deux équations à trois inconnues et doit donc être complétée par au moins une équation supplémentaire, ce qui est réalisé en effectuant une seconde série d'étapes semblable à ladite première série d'étapes, en modifiant l'orientation du deuxième système de référence R2 du véhicule 1 par rapport au premier système de référence RM absolu, ce qui est effectué en déplaçant ledit véhicule de façon telle que son deuxième système de référence R2 ait une orientation nettement différente de la précédente R21, par rapport audit premier système de référence RM absolu.

On va alors mesurer les composantes du vecteur $\vec{g}$ perçues par l'outillage 8 et l'équipement dans cette seconde position, ces mesures de composantes du vecteur $\vec{g}$ pouvant être transformées en valeurs d'angles de roulis, d'angles d'assiette longitudinale et de cap, respectivement $\Phi 12$, $\theta 12$, $\Omega 12$, pour l'outillage 8, et $\Phi 22$, $\theta 22$, $\Omega 22$, pour l'équipement 2, significatifs de l'orientation du système de référence de l'appareil qui a réalisé ces mesures.

On dispose ainsi d'une deuxième relation, semblable à la précédente, où le dernier indice des composantes du vecteur mesuré est devenu 2 au lieu de 1, ce qui aboutit au groupe de relations suivant:

$$\begin{vmatrix} \vec{g}11 \\ \vec{g}12 \end{vmatrix} = \begin{vmatrix} R1(\alpha,\beta,\Gamma) & 0 \\ 0 & R1(\alpha,\beta,\Gamma) \end{vmatrix} \times \begin{vmatrix} \vec{g}21 \\ \vec{g}22 \end{vmatrix}$$

Il s'agit d'un système de trois équations indépendantes à trois inconnues $\alpha$, $\beta$, $\Gamma$, obtenues grâce à l'hypothèse de non colinéarité des vecteurs $\vec{g}21$ et $\vec{g}22$ que l'on résout de façon traditionnelle.

On mémorise alors le premier opérateur de rotation $R1(\alpha,\beta,\Gamma)$ et l'intègre au calculateur 6, qui l'applique sur les angles $\Phi 2$, $\theta 2$, $\Omega 2$ déterminés ultérieurement à partir de mesures ultérieures, donnant des données ultérieures significatives de valeurs ultérieures mesurées par l'équipement 2.

L'identification de la rotation $R1(\alpha,\beta,\Gamma)$ étant faite, celle-ci sera intégrée au niveau de l'ensemble de l'installation de navigation, de façon à corriger les mesures fournies par l'équipement 2 par les angles $\alpha$, $\beta$, $\Gamma$. Par conséquent, le procédé a pour résultat, après l'obtention du premier et second opérateur de rotation $R1(\alpha,\beta,\Gamma)$ ou $R2(\alpha,\beta,\Gamma)$, de rendre quasi-égales, ou égales, les mesures des angles $\Phi,\theta,\Omega$ dans le deuxième système de référence R2 du véhicule 1 et dans le troisième système de référence R3 de l'équipement 2.

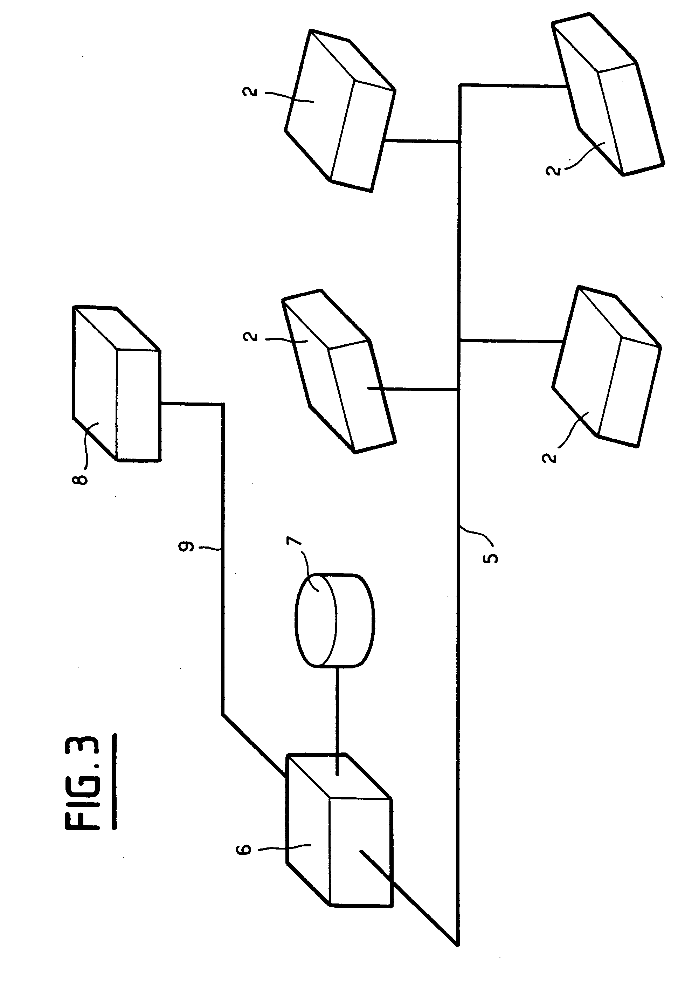

La figure 3 illustre la généralisation de ce procédé d'harmonisation au cas d'une pluralité de M (M: entier positif) équipements 2 à harmoniser, chacun ayant des opérateurs de rotation $R(\alpha i,\beta i,\Gamma i)$ propres (avec i = 1 à M). En effet, dans ce cas il est possible d'effectuer simultanément les opérations précédemment décrites et de calculer simultanément la pluralité d'opérateurs de rotation $R(\alpha i,\beta i,\Gamma i)$, à partir des mesures effectuées par les divers équipements 2 et par un seul outillage 8.

Par ailleurs, certains équipements 2 peuvent comporter des interfaces de dialogue, ce qui offre une plus grande souplesse pour l'harmonisation.

En particulier, on peut utiliser des sorties de l'équipement 2 ou de l'outillage 8 le plus performant, par exemple des sorties relatives à la vitesse et / ou à l'accélération du véhicule, pour améliorer l'homogénéité des mesures des autres équipements 2 et identifier les rotations de ces derniers par rapport à l'outillage 8 de référence.

De plus, la précision de la correction d'erreur d'harmonisation selon ledit procédé peut encore être améliorée en poursuivant la comparaison entre les valeurs mesurées par l'outillage 8 et l'équipement 2 . On effectue alors de nouvelles mesures en disposant le véhicule 1 au sol dans un nombre d'orientations différentes supérieur à deux et / ou lorsque le véhicule 1 se déplace par exemple avec des orientations variables en vol, ce qui permet d'acquérir un grand nombre de données permettant d'établir des relations surabondantes pour définir les angles $\alpha$, $\beta$ et $\Gamma$. Ceci présente l'avantage de pouvoir, par un calcul classique de régression d'erreur de mesure, définir ces angles $\alpha$, $\beta$ et $\Gamma$ avec une précision supérieure à celle des appareils qui ont effectué ces mesures, l'erreur de mesure de chaque appareil étant supposée non biaisée par rapport à la valeur théorique.

Cette amélioration de la précision des résultats amène à effectuer une troisième série d'étapes, comportant les étapes suivantes:

- on mesure des données $\vec{g}1j$ et $\vec{g}2j$ (avec j: entier de 3 à N), issues respectivement de l'outillage 8 et de l'équipement 2, relatives à un ensemble de (N-2) orientations supplémentaires dudit véhicule 1;

- on transmet au calculateur 6, par la ladite première liaison 5, lesdites données relatives audit ensemble de (N-2) orientations supplémentaires;

- on calcule, dans le calculateur 6, un second opérateur de rotation $R2(\alpha,\beta,\Gamma)$, utilisé, en lieu et place du premier opérateur de rotation $R1(\alpha,\beta,\Gamma)$, pour corriger les erreurs d'harmonisation de, ou des, équipement(s) 2, ce second opérateur de rotation étant obtenu à partir des équations surabondantes

suivantes:

$$\begin{vmatrix} \vec{g}11 \\ \vec{g}1j \\ \vec{g}1N \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \times \begin{vmatrix} \vec{g}21 \\ \vec{g}2j \\ \vec{g}2N \end{vmatrix}$$

avec j entier de 1 à N, N ≥ 3

par une méthode minimisant l'effet des erreurs de mesure, ce qui améliore la précision de la détermination des angles $\alpha$, $\beta$, $\Gamma$.

**Revendications**

1. Procédé pour l'harmonisation d'un équipement (2) par rapport à un véhicule (1), ledit équipement (2) étant installé de façon fixe à bord dudit véhicule (1) qui, par rapport à un premier système de référence (RM) absolu, a une orientation définie par un deuxième système de référence (R2) lié audit véhicule (1), ledit équipement (2) étant soumis au champ de gravité terrestre représenté par un vecteur gravité $\vec{g}$ orienté selon son gradient, et l'orientation dudit équipement (2) étant définie, par rapport audit premier système de référence (RM) absolu, par un troisième système de référence (R3), cet équipement (2) comportant un dispositif de mesure (3, 4) des composantes dudit vecteur gravité fixé audit équipement (2) ;

   et ledit véhicule (1) portant ;
   - un calculateur (6) ;
   - une mémoire (7) associée audit calculateur (6) ; et
   - une première liaison (5) reliant l'équipement (2) audit calculateur (6) et à ladite mémoire (7), ledit procédé comprenant les étapes :
   - de disposer, de façon fixe à bord du véhicule (1), un outillage (8) harmonisé par rapport à celui-ci, comparable audit équipement (2), relié audit calculateur (6) et à ladite mémoire (7) par une seconde liaison (9) ; et
   - d'effectuer des mesures de composantes du vecteur gravité par ledit équipement (2) et ledit outillage (8),

   caractérisé en ce qu'il comporte les étapes suivantes :
   - on place le véhicule (1) successivement dans une pluralité de N positions fixes par rapport au sol, ce qui correspond à N positionnements dudit deuxième système de référence (R2) par rapport audit premier système de référence (RM) absolu ;
   - pour chaque j$^{\text{ème}}$ position desdites N positions fixes (avec j = 1,2,...,N), on réalise, avec l'outillage (8), des mesures représentatives des composantes du vecteur $\vec{g}1j$ représentant le champ de gravité terrestre $\vec{g}$ perçu par l'outillage (8) dans le deuxième système de référence (R2) ;
   - on transmet à la mémoire (7), par ladite seconde liaison (9) reliant l'outillage (8) à ladite mémoire (7), et l'on y mémorise, lesdites mesures des vecteurs $\vec{g}1j$ ;
   - pour chacune desdites j$^{\text{èmes}}$ positions fixes, on réalise avec ledit équipement (2), des mesures représentatives des composantes du vecteur $\vec{g}2j$ représentant le champ de gravité terrestre $\vec{g}$ perçu par l'équipement (2) dans le troisième système de référence (R3) ;
   - on transmet à la mémoire (7), par ladite première liaison (5), et l'on y mémorise, lesdites mesures des vecteurs $\vec{g}2j$ ;
   - on calcule, dans le calculateur (6), a partir desdites mesures des vecteurs $\vec{g}1j$ et $\vec{g}2j$, un opérateur de rotation R2($\alpha,\beta,\Gamma$) selon les relations d'Euler corrigeant les erreurs angulaires d'harmonisation des mesures effectuées dans ledit troisième système de référence (R3) dudit équipement (2) par rapport à celles effectuées dans ledit deuxième système de référence (R2) dudit véhicule (1), selon les relations :

$$
\begin{vmatrix} \vec{g}11 \\ \vec{g}1j \\ \vec{g}1N \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \times \begin{vmatrix} \vec{g}21 \\ \vec{g}2j \\ \vec{g}2N \end{vmatrix}
$$

avec N ≧ 3,
par une méthode minimisant l'effet des erreurs de mesure ;
- on mémorise l'opérateur de rotation R2($\alpha,\beta,\Gamma$) et on l'intègre au calculateur (6) qui l'applique sur des angles ($\Phi2,\Theta2,\Omega2$) déterminés ultérieurement à partir de mesures ultérieures, respectivement représentatifs des angles de roulis, d'assiette longitudinale et de cap mesurés par ledit équipement (2), donnant des données ultérieures de gravité mesurées, significatives de valeurs ultérieures mesurées par ledit équipement (2) selon son troisième système de référence (R3).

2. Procédé selon la revendication 1,
caractérisé en ce que lesdites mesures des vecteurs $\vec{g}1j$, d'une part, et lesdites mesures des vecteurs $\vec{g}2j$, d'autre part, sont respectivement représentatives des angles $\Phi1$, $\Theta1$ et $\Omega1$, représentant l'angle de roulis, l'angle d'assiette longitudinale et l'angle de cap dudit véhicule (1), d'une part, et des angles $\Phi2,\Theta2$ et $\Omega2$, représentant l'angle de roulis, l'angle d'assiette longitudinale et l'angle de cap dudit équipement (2).

3. Procédé selon l'une des revendications 1 ou 2, appliqué à une pluralité de M (M : entier positif) équipements (2) à harmoniser par rapport audit véhicule (1), chacun de ces équipements (2) ayant des opérateurs de rotation R2($\alpha i$, $\beta i$, $\Gamma i$) propres (avec i = 1 à M),
caractérisé en ce que la pluralité des opérateurs de rotation R2($\alpha i$, $\beta i$, $\Gamma i$) est déterminée simultanément, à partir des mesures effectuées par les divers équipements (2) et part un outillage (8).

4. Procédé selon la revendication 3,
caractérisé en ce que la mémoire (7) est unique.

5. Procédé selon la revendication 3 ou 4,
caractérisé en ce que le calculateur (6) est unique.

6. Procédé selon l'une quelconque des revendications 1 à 5,
caractérisé en ce que l'outillage (8) est constitué par un équipement (2), choisi comme le plus performant.

7. Procédé selon l'une quelconque des revendications 1 à 6,
caractérisé en ce qu'on utilise, de plus, des données, issues de l'outillage (8) ou d'au moins un équipement (2), relatives à la vitesse et/ou à l'accélération dudit véhicule (1).

8. Système pour la mise en oeuvre du procédé d'harmonisation spécifié sous l'une des revendications 1 à 7, dans lequel, d'une part, ledit équipement (2) comporte un dispositif de mesure (3,4) des composantes dudit vecteur gravité $\vec{g}$ fixé audit équipement (2), et, d'autre part, ledit véhicule (1) porte :
- un calculateur (6) ;
- une mémoire (7) associée audit calculateur (6) ;
- une première liaison (5) reliant l'équipement (2) audit calculateur (6) et à ladite mémoire (7) ; et
- un outillage (8) harmonisé par rapport audit véhicule (1) et comparable audit équipement (2), relié audit calculateur (6) et à ladite mémoire (7) par une seconde liaison (9),
caractérisé en ce que ledit calculateur (6) intègre un opérateur de rotation R2 ($\alpha$, $\beta$, $\Gamma$) selon les relations d'Euler pour corriger les erreurs angulaires d'harmonisation des mesures effectuées dans ledit troisième système de référence (R3) dudit équipement (2) par rapport à celles effectuées dans ledit deuxième système de référence (R2) dudit véhicule (1), selon les relations :

$$
\begin{vmatrix} \vec{g}11 \\ \vec{g}1j \\ \vec{g}1N \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \times \begin{vmatrix} \vec{g}21 \\ \vec{g}2j \\ \vec{g}2N \end{vmatrix}
$$

avec $N \geq 3$,

par une méthode minimisant l'effet des erreurs de mesures.

**9.** Système selon la revendication 8, caractérisé en ce que l'outillage (8) ou au moins un équipement (2) fournit, de plus, des données relatives à la vitesse et/ou à l'accélération dudit véhicule (1).

## Claims

**1.** Method for harmonizing an equipment (2) relative to a vehicle (1), said equipment (2) being installed fixedly on board said vehicle (1) which, relative to a first absolute reference system (RM), has an orientation defined by a second reference system (R2) tied to said vehicle (1), said equipment (2) being subjected to the earth's gravitational field represented by a gravity vector $\vec{g}$ oriented along its gradient, and the orientation of said equipment (2) being defined, relative to said first absolute reference system (RM), by a third reference system (R3), this equipment (2) comprising a device (3, 4) for measuring the components of said gravity vector fixed to said equipment (2);
and said vehicle (1) carrying;
- a computer (6);
- a memory (7) associated with said computer (6); and
- a first link (5) connecting the equipment (2) to said computer (6) and to said memory (7),
said method comprising the steps:
- of disposing, fixedly on board the vehicle (1), an appliance (8) harmonized relative to the latter, comparable to said equipment (2), connected to said computer (6) and to said memory (7) by a second link (9); and
- of making measurements of components of the gravity vector with said equipment (2) and said appliance (8),
characterized in that it includes the following steps:
- the vehicle (1) is placed successively in a plurality of N fixed positions relative to the ground, this corresponding to N positionings of said second reference system (R2) relative to said first absolute reference system (RM);
- for each $j^{th}$ position of said N fixed positions (with j = 1,2,...,N), there are made, with the appliance (8), measurements representative of the components of the vector $\vec{g}1j$ representing the earth's gravitational field $\vec{g}$ sensed by the appliance (8) in the second reference system (R2);
- said measurements of the vectors $\vec{g}1j$ are transmitted to the memory (7), via said second link (9) connecting the appliance (8) to said memory (7), and stored therein;
- for each of said $j^{th}$ fixed positions, there are made, with the equipment (2), measurements representative of the components of the vector $\vec{g}2j$ representing the earth's gravitational field $\vec{g}$ sensed by the equipment (2) in the third reference system (R3);
- said measurements of the vectors $\vec{g}2j$ are transmitted to the memory (7), via said first link (5), and stored therein;
- in the computer (6), from said measurements of the vectors $\vec{g}1j$ and $\vec{g}2j$, a rotation operator $R2(\alpha, \beta, \Gamma)$ is calculated according to the Euler relations, correcting the angular errors of harmonization of the measurements made in said third reference system (R3) of said equipment (2) relative to those made in said second reference system (R2) of said vehicle (1), according to the relationships:

$$\begin{vmatrix} \overline{g}_{11} \\ \overline{g}_{1j} \\ \overline{g}_{1N} \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \times \begin{vmatrix} \overline{g}_{21} \\ \overline{g}_{2j} \\ \overline{g}_{2N} \end{vmatrix}$$

with N ≥ 3

by a procedure minimizing the effect of the measurement errors;

- the rotation operator R2($\alpha$, $\beta$, $\Gamma$) is stored and incorporated in the computer (6) which applies it to angles ($\Phi 2$, $\theta 2$, $\Omega 2$) determined subsequently from subsequent measurements, respectively representative of the angles of roll, of pitch attitude and of heading which are measured by said equipment (2), giving subsequent measured gravitational data indicative of subsequent values measured by said equipment (2) according to its third reference system (R3).

2. Method according to Claim 1, characterized in that said measurements of the vectors $\vec{g}_{1j}$, on the one hand, and said measurements of the vectors $\vec{g}_{2j}$, on the other hand, are respectively representative of the angles $\Phi 1$, $\theta 1$ and $\Omega 1$ representing the angle of roll, the angle of pitch attitude and the angle of heading of said vehicle (1), on the one hand, and of the angles $\Phi 2$, $\theta 2$ and $\Omega 2$ representing the angle of roll, the angle of pitch attitude and the angle of heading of said equipment (2).

3. Method according to one of Claims 1 and 2 applied to a plurality of M (M: positive integer) equipments (2) to be harmonized relative to said vehicle (1), each of these equipments (2) having characteristic rotation operators R2($\alpha_i$, $\beta_i$, $\Gamma_i$) (with i = 1 to M), characterized in that the plurality of the rotation operators R2($\alpha_i$, $\beta_i$, $\Gamma_i$) is determined simultaneously, from measurements made by the various equipments (2) and by an appliance (8).

4. Method according to Claim 3, characterized in that there is a single memory (7).

5. Method according to Claim 3 or 4, characterized in that there is a single computer (6).

6. Method according to any one of Claims 1 to 5, characterized in that the appliance (8) consists of an equipment (2), chosen as that of highest performance.

7. Method according to any one of Claims 1 to 6, characterized in that use is made moreover of the data output by the appliance (8) or by at least one equipment (2) and relating to the speed and/or the acceleration of said vehicle (1).

8. System for implementing the harmonization method specified in one of Claims 1 to 7, in which, on the one hand, said equipment (2) comprises a device (3, 4) for measuring the components of said gravity vector $\vec{g}$ fixed to said equipment (2) and, on the other hand, said vehicle (1) carries:
   - a computer (6);
   - a memory (7) associated with said computer (6);
   - a first link (5) connecting the equipment (2) to said computer (6) and to said memory (7); and
   - an appliance (8), harmonized relative to said vehicle (1) and comparable to said equipment (2), connected to said computer (6) and to said memory (7) by a second link (9), characterized in that said computer (6) incorporates a rotation operator R2($\alpha$, $\beta$, $\Gamma$) according to the Euler relations for correcting the angular errors of harmonization of the measurements made in said third reference system (R3) of said equipment (2) relative to those made in said second reference system (R2) of said vehicle (1), according to the relationships:

$$\begin{vmatrix} \overline{g}_{11} \\ \overline{g}_{1j} \\ \overline{g}_{1N} \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \times \begin{vmatrix} \overline{g}_{21} \\ \overline{g}_{2j} \\ \overline{g}_{2N} \end{vmatrix}$$

with N ≥ 3,
by a procedure minimizing the effect of the measurement errors.

9. System according to Claim 8, characterized in that the appliance (8) or at least one equipment (2) provides, moreover, data relating to the speed and/or the acceleration of said vehicle (1).

**Patentansprüche**

1. Verfahren zum Abgleich einer Einrichtung (2) in Bezug zu einem Fahrzeug (1), wobei die Einrichtung (2) fest an Bord des Fahrzeugs installiert ist, das bezüglich eines ersten absoluten Bezugssystems (RM) eine durch ein zweites, mit dem Fahrzeug (1) verbundenen Bezugsystem (R2) bestimmte Orientierung aufweist, wobei die Einrichtung (2) dem Erdgravitationsfeld, das durch einen nach seinem Gradienten ausgerichteten Gravitätsvektor $\vec{g}$ dargestellt ist, unterworfen ist und wobei die Orientierung der Einrichtung (2) in Bezug zum ersten absoluten Bezugssystem RM durch ein drittes Bezugssystem (R3) bestimmt wird, wobei diese Einrichtung (2) eine Vorrichtung zur Messung (3, 4) der Komponenten des Gravitätsvektors aufweist, die fest mit der Einrichtung (2) verbunden ist;
und wobei das Fahrzeug (1) trägt;
   - einen Rechner (6);
   - einen Speicher (7), der mit dem Rechner (6) verbunden ist; und
   - eine erste Leitung (5), die die Einrichtung (2) mit dem Rechner (6) und dem Speicher (7) verbindet,
wobei das Verfahren folgende Schritte umfaßt:
   - ein Referenzgerät (8) auf feste Weise an Bord des Fahrzeugs (1) anzubringen, das bezüglich des Fahrzeugs abgeglichen ist, das vergleichbar mit der Einrichtung (2) ist und das mit dem Rechner (6) und mit dem Speicher (7) über eine zweite Leitung (9) verbunden ist und
   - Messungen der Komponenten des Gravitätsvektors durch die Einrichtung (2 und das Referenzgerät (8) durchzuführen,
dadurch gekennzeichnet, daß es die folgenden Schritte umfaßt:
man stellt das Fahrzeug (1) nacheinander in eine Vielzahl von N Positionen, die fest in Bezug zum Boden sind, was N Stellungen des zweiten Bezugssystems (R2) in Bezug zum ersten absoluten Bezugssystem (RM) entspricht;
   - für jede j-te Stellung der N festen Stellungen (mit j = 1,2,...,N) führt man mit dem Referenzgerät (8) Messungen durch, die repräsentativ für die Komponenten des Vektors $\vec{g}1j$ sind, die das Erdgravitationsfeld $\vec{g}$ aufgenommen durch das Referenzgerät (8) in dem zweiten Bezugssystem (R2) darstellen;
   - man übermittelt über die zweite Leitung (9), die das Referenzgerät (8) mit dem Speicher (7) verbindet, die Messungen der Vektoren $\vec{g}1j$ in den Speicher (7) und speichert diese dort;
   - für jede j-te feste Stellung führt man mit der Einrichtung (2) Messungen durch, die repräsentativ für die Komponenten des Vektors $\vec{g}2j$ sind, die das Erdgravitationsfeld $\vec{g}$ aufgenommen durch die Einrichtung (2) in dem dritten Bezugssystem (R3) darstellen;
   - man übermittelt die Messungen der Vektoren $\vec{g}2j$ über die erste Leitung (5) an den Speicher und speichert diese dort;
   - man berechnet in dem Rechner (6) ausgehend von den Messungen der Vektoren $\vec{g}1j$ und $\vec{g}2j$ einen Drehoperator R2($\alpha,\beta,\Gamma$) gemäß den Eulerschen Beziehungen, wobei der Operator die Winkelfehler beim Abgleich der durchgeführten Messungen in dem dritten Bezugssystem (R3) der Einrichtung (2) in Bezug auf die Messungen durch das zweite Bezugssystem (R2) des Fahrzeugs (1) gemäß den Beziehungen korrigiert:

$$\begin{vmatrix} \vec{g}11 \\ \vec{g}1j \\ \vec{g}1N \end{vmatrix} = \begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix} \quad x \quad \begin{vmatrix} \vec{g}21 \\ \vec{g}2j \\ \vec{g}2N \end{vmatrix}$$

mit N ≥ 3, durch ein Verfahren, das den Effekt der Meßfehler minimiert;

- man speichert den Drehoperator R2($\alpha,\beta,\Gamma$) und man gibt diesen in den Rechner (6) ein, der ihn auf die Winkel ($\phi2,\theta2,\Omega2$) anwendet, die danach ausgehend von weiteren Messungen bestimmt wurden, die repräsentativ für den Rollwinkel, den Trimmwinkel beziehungsweise Kurswinkel gemessen durch die Einrichtung (2) sind und die weitere gemessene Größen der Gravität bilden, die signifikant für weitere durch die Einrichtung (2) gemessene Werte in deren dritten Bezugssystem R3 sind.

2. Verfahren nach Anspruch 1, dadurch gekennzeichnet, daß die Messungen der Vektoren $\vec{g}1j$ einerseits und die Messungen der Vektoren $\vec{g}2j$ andererseits repräsentativ sind für die Winkel $\phi1,\theta1,\Omega1$ einerseits, die den Rollwinkel, den Trimmwinkel und den Kurswinkel des Fahrzeugs (1) darstellen und für die Winkel $\phi2,\theta2,\Omega2$ andererseits, die den Rollwinkel, den Trimmwinkel und den Kurswinkel der Einrichtung (2) darstellen.

3. Verfahren nach einem der Ansprüche 1 oder 2, angewandt auf eine Vielzahl M (M: ganzzahlig positiv) von Einrichtungen (2) zum Abgleichen in Bezug auf das Fahrzeug (1), wobei jede dieser Einrichtungen (2) einen Drehoperator R2($\alpha i,\beta i,\Gamma i$) zueigen hat (mit i = 1 bis M), dadurch gekennzeichnet, daß die Vielzahl der Drehoperatoren R2($\alpha i,\beta i,\Gamma i$) gleichzeitig ausgehend von den durch die verschiedenen Einrichtungen (2) und einem Referenzgerät (8) durchgeführten Messungen bestimmt werden.

4. Verfahren nach Anspruch 3, dadurch gekennzeichnet, daß ein einziger Speicher (7) vorhanden ist.

5. Verfahren nach Anspruch 3 oder 4, dadurch gekennzeichnet, daß ein einziger Rechner (6) verwendet wird.

6. Verfahren nach einem der Ansprüche 1 bis 5, dadurch gekennzeichnet, daß das Referenzgerät (8) aus einer Einrichtung (2) besteht, die als am leistungsfähigsten ausgewählt ist.

7. Verfahren nach einem der Ansprüche 1 bis 6, dadurch gekennzeichnet, daß man zusätzlich von dem Referenzgerät (8) oder wenigstens einer Einrichtung (2) hergeleitete Größen bezüglich der Geschwindigkeit und/oder der Beschleunigung des Fahrzeugs (1) verwendet.

8. System zur Durchführung des Abgleichverfahrens gemäß einem der Ansprüche 1 bis 7, indem einerseits die Einrichtung (2) eine Vorrichtung zur Messung (3, 4) der Komponenten des Gravitätsvektors $\vec{g}$, die an der Einrichtung (2) befestigt ist, umfaßt, und andererseits das Fahrzeug (1) trägt:
   - einen Rechner (6);
   - einen Speicher (7), der mit dem Rechner (6) verbunden ist;
   - eine erste Leitung (5), die die Einrichtung (2) mit dem Rechner (6) und dem Speicher (7) verbindet; und
   - ein Referenzgerät (8), das im Bezug zum Fahrzeug (1) abgeglichen und vergleichbar mit der Einrichtung (2) ist und das mit dem Rechner (6) und dem Speicher (7) über eine zweite Leitung (9) verbunden ist, dadurch gekennzeichnet, daß der Rechner (6) einen Drehoperator R2($\alpha,\beta,\Gamma$) gemäß den Eulerschen Beziehungen beinhaltet, um die Winkelfehler beim Abgleich der in dem dritten Bezugssystem (R3) der Einrichtung (2) in Bezug zu den in dem zweiten Bezugssystem (R3) des Fahrzeugs (1) durchgeführten Messungen nach den Beziehungen zu korrigieren:

$$
\begin{vmatrix} \vec{g}11 \\ \vec{g}1j \\ \vec{g}1N \end{vmatrix}
=
\begin{vmatrix} R2(\alpha,\beta,\Gamma) & 0 & 0 \\ 0 & R2(\alpha,\beta,\Gamma) & 0 \\ 0 & 0 & R2(\alpha,\beta,\Gamma) \end{vmatrix}
\quad x \quad
\begin{vmatrix} \vec{g}21 \\ \vec{g}2j \\ \vec{g}2N \end{vmatrix}
$$

mit N $\geq$ 3; durch eine Methode, die den Effekt der Meßfehler minimiert.

9. System nach Anspruch 8, dadurch gekennzeichnet, daß das Referenzgerät (8) oder wenigstens eine Einrichtung (2) zusätzlich Größen bezüglich der Geschwindigkeit und/oder der Beschleunigung des Fahrzeugs (1) liefert.

## FIG.1

EP 0 502 770 B1

FIG. 2

# FIG.3